**Europäisches Patentamt**

**European Patent Office**

**Office européen des brevets**

(19)

(11) **EP 1 591 781 A1**

(12) **EUROPEAN PATENT APPLICATION**

(43) Date of publication:
02.11.2005 Bulletin 2005/44

(51) Int Cl.⁷: **G01N 27/407**

(21) Application number: 05075905.9

(22) Date of filing: 14.04.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **30.04.2004 US 836518**

(71) Applicant: **Delphi Technologies, Inc.
Troy, MI 48007 (US)**

(72) Inventors:
• **Mu, Ming-Cheng
  Troy, MI 48098 (US)**

• **Valdes, Carlos A.
  Flint, MI 48507 (US)**
• **Detwiler, Eric J.
  Davison, MI 48423 (US)**
• **Kikuchi, Paul C.
  Fenton, MI 48430 (US)**

(74) Representative: **Denton, Michael John et al
Delphi European Headquarters,
64 avenue de la Plaine de France,
Paris Nord II,
B.P. 65059, Tremblay en France
95972 Roissy Charles de Gaulle Cedex (FR)**

(54) **Method for making sensors, and sensors made therefrom**

(57)     A method of making a sensor element (10) comprises: combining coarse aluminium oxide with fine aluminium oxide and a binder to form a mixture, milling the mixture to form a base slurry, mixing a supported catalyst with the base slurry and a fugitive material to form a final slurry, applying the slurry to a sensor element (10) precursor over at porous protective layer (40, 48) at least in an area opposite a sensing electrode (20), and calcining the sensor element (10) precursor to form a calcined sensor element (10) with a catalyzed coating over at least a portion of the porous protective layer (40, 48). The coarse aluminium oxide has a coarse agglomerate size and the fine aluminium oxide has a fine particle size less than the coarse agglomerate size.

Fig.1.

EP 1 591 781 A1

**Description**

BACKGROUND OF THE INVENTION

Gas sensors are used to sense the presence of constituents of exhaust gases, and are typically used in a variety of applications that require qualitative as well as quantitative analysis of gases. In automotive applications, the direct relationship between the oxygen concentration in an exhaust gas and the air-to-fuel (A/F) ratio of the fuel mixture supplied to the engine allows the gas sensor to provide oxygen concentration measurements for the determination of optimum combustion conditions, maximization of fuel economy, and management of exhaust emissions. A/F is the ratio of air mass to fuel mass. For conventional petroleum-based fuels, the stoichiometric A/F is about 14.6. A/F is called rich if A/F is less than 14.6 and lean if A/F is greater than 14.6.

A conventional stoichiometric gas sensor typically consists of an ionically conductive solid electrolyte material, a porous sensing electrode on the exterior of the sensor having a porous protective overcoat exposed to the exhaust gases, and a porous reference electrode on the interior surface of the sensor exposed to a known oxygen partial pressure. Sensors typically used in automotive applications use a yttria-stabilized zirconia-based electrochemical galvanic cell with porous platinum (Pt) catalytic electrodes, operating in potentiometric mode, to detect the relative amounts of oxygen present in the exhaust generated by the automobile engine. When opposite surfaces of this galvanic cell are exposed to different oxygen partial pressures, an electromotive force is developed between the electrodes on the opposite surfaces of the zirconia wall, according to the Nernst equation:

$$E \; = \; \left( \frac{-\, RT}{4\;F} \right) \; \ln \; \left( \frac{P_{O_2}^{ref}}{P_{O_2}} \right)$$

where:

| | |
|---|---|
| E = | electromotive force |
| R = | universal gas constant |
| F = | Faraday constant |
| T = | absolute temperature of the gas |
| $P^{ref}$ = | oxygen partial pressure of the reference gas |
| $P_{O2}$ = | oxygen partial pressure of the exhaust gas |

Due to the large difference in oxygen partial pressure between fuel-rich and fuel-lean exhaust conditions, the electromotive force changes sharply at the stoichiometric point, giving rise to the characteristic switching behavior of these sensors. Consequently, these potentiometric gas sensors indicate qualitatively whether the engine is operating fuel-rich or fuel-lean, without quantifying the actual air-to-fuel ratio of the exhaust mixture.

In general, electrodes are constructed around an electrolyte, which conducts ionic oxygen. The electrolyte develops an electromotive force, E, when the oxygen concentration varies on opposing sides of the electrolyte surfaces. To measure the oxygen concentration of the exhaust gas, one side of the electrolyte is exposed to the exhaust gas while the other side is kept in contact with air. The electromotive force, E, across the electrolyte is a function of the difference in oxygen concentration.

The sensor can be poisoned by various impurities in the engine exhaust. For example, materials such as silica originated from silicon containing engine coolant leakage or degassing of engine gasket seal (containing silicon) can deposit on the sensing electrode of the oxygen sensor, thereby suppressing performance. The sensor can also be affected by the formation of an amorphous zinc pyrophosphate glaze, which originates from engine oil additives, such as zinc dialkyldithiophosphate (ZDP). The zinc pyrophosphate glaze can cover the entire surface of the oxygen sensor inhibiting the reach of exhaust gases to the electrode. In order to prevent such poisoning damages to the sensing electrode, protective coatings comprising heat resistant metal oxides (e.g., spinel $MgAl_2O_4$) and high surface area alumina have traditionally been applied to the sensing element of the sensor. The alumina coating is formed on a porous spinel layer, which is in direct contact with the sensing electrode. The spinel layer provides limited poison protection and structural integrity to the sensing element, while the alumina layer provides major protection from poisoning damages to the sensing electrode.

However, these protective coatings employed in the sensor to extend the longevity of the sensor create a diffusion barrier layer. Consequently this layer creates an unreliable switch point due to the difference in diffusivity of the exhaust constituents. Hydrogen molecules, for example, diffuse three to four times faster than the oxygen molecules, which creates a premature switch from lean to rich. This unreliability in switch point between the rich and lean stage, therefore, creates the necessity of more complicated algorithms. Therefore, along with a more durable sensor element, a sensor element that can more readily equilibrate the different exhaust species prior to diffusion such that a more accurate switch point may be obtained is also needed.

Another problem typically associated with sensor elements, is the inability of the sensors to perform at low temperatures, i.e., temperatures less than or equal to about 300°C. Therefore, faster light-off catalysts, which will allow the sensor to perform sooner by decreasing the exhaust temperature required for operation, are also needed.

SUMMARY OF THE INVENTION

Disclosed herein are sensor elements and methods for making sensor elements. In one embodiment, the method of making a sensor element comprises: combining coarse aluminum oxide with fine aluminum oxide and a binder to form a mixture, milling the mixture to form a base slurry, mixing a supported catalyst with the base slurry and a fugitive material to form a final slurry, applying the slurry to a sensor element precursor on a side of a sensing electrode opposite an electrolyte, and calcining the sensor element precursor to form a calcined sensor element with a catalyzed coating. The coarse aluminum oxide has a coarse agglomerate size and the fine aluminum oxide has a fine particle size less than the coarse agglomerate size.

In one embodiment, the sensor element comprises: a sensing electrode and a reference electrode in ionic communication via an electrolyte; a porous protective layer disposed on a side of the sensing electrode opposite the electrolyte; a catalysed coating disposed on a side of the porous protective layer opposite the sensing electrode. The catalyzed coating comprises coarse aluminium oxide having a coarse agglomerate size and fine aluminium oxide having a fine particle size that is less than the coarse agglomerate size; and a supported catalyst. This sensor element has a switch point correction of less than or equal to 0.004.

The above described and other features are exemplified by the following figures and detailed description.

BRIEF DESCRIPTION OF THE DRAWINGS

Refer now, by way of example, to the accompanying drawings.

Figure 1 is an expanded, isometric representation of a sensor element.
Figure 2 is a graph depicting the steady state performance of a sensor element.
Figure 3 is a graph depicting lambda at the switch point from rich to lean as a function of aging.
Figure 4 is a graph depicting lambda at the switch point from lean to rich as a function of aging.

DESCRIPTION OF THE PREFERRED EMBODIMENT

A method of forming a sensor is described below wherein a catalytic coating is deposited on a sensor element (e.g., as the outermost layer) to increase the poison resistance and temperature tolerance of the sensor element, to enhance the accuracy of the switch point of the sensor element, and to enhance the performance of the sensor element at low operating temperatures, i.e., temperatures of less than or equal to about 260°C. It should be understood that although the gas sensor apparatus is described as being an oxygen sensing device, the apparatus could be a nitrogen oxides sensing device, an ammonia sensing device, a hydrogen sensing device, a hydrocarbon sensing device, or the like. Additionally, different types of sensor geometries can be employed, e.g., planar, conical, and the like. It is also noted that all ranges disclosed herein are inclusive and combinable (e.g., ranges of up to about 25 wt%, with about 5 wt% to about 20 wt% desired, and about 10 wt% to about 15 wt% more desired, would therefore include the ranges of about 5 wt% to about 25 wt%, about 10 wt% to about 25 wt%, about 5 wt% to about 15 wt%, etc.).

In one embodiment, the method comprises disposing a catalyst on a support, drying, and optionally calcining to form a supported catalyst. The supported catalyst is then redistributed into a base slurry comprising milled aluminum oxides and binder, to form a final slurry. The sensor element, which comprises an electrolyte disposed between electrodes, and an optional heater disposed on a side of the reference electrode opposite the electrolyte, is dipped into the final slurry to form the catalyzed protective layer over at least the sensing electrode. The sensor element is then dried (actively and/or passively) and calcined. Depending upon the type of sensor element, other areas of the sensor may also be coated with the final slurry, e.g., for a planar sensor, the layer on a side of the heater opposite the reference electrode, may also be coated with the final slurry.

The sensor element comprises electrodes disposed in ionic communication with an electrolyte. On a side of the sensing electrode, opposite the electrolyte is the catalyzed, protective, porous coating (the catalyst coating), which constitutes the outermost layer of the sensor in contact with the gas to be sensed. The catalytic coating comprises a supported catalyst and aluminum oxide(s). The catalyst comprises a material comprising a platinum group metal such as platinum, palladium, rhodium, ruthenium, osmium, iridium, and the like, as well as oxides, alloys, and combinations comprising at least one of the foregoing materials, with platinum preferred. The catalyst (e.g., the precious metal) preferably has a particle size that is conducive to achieving and maintaining high catalytic activity during the life of the sensing element without affecting the longevity thereof, wherein the particle size is an average based upon the major diameter. Suitable average particle sizes, $d_{50}$, prior to sensor aging, for example, are about 5 to about 40 nanometers (nm), with about 5 nm to about 30 nm preferred, about 7 nm to about 20 nm, and about 10 nm to about 15 nm especially preferred. It is noted that, unless otherwise specified, all particle sizes and agglomerate sizes are based upon the major diameter of the particles/agglomerate.

In order to attain the desired catalytic activity in the final coating, the catalyst loading on the support can be about 1 wt% to about 20 wt% catalyst, based upon the total weight of the catalyst, support, and stabilizing agent (if present in the support), with less than or equal to about 20 wt% catalyst preferred, less than or equal to about 10 wt% more preferred, and less than or equal to about 7 wt% even more preferred.

The catalyst can be disposed on a support prior to introduction to the aluminum oxide base slurry and other coating components. Some suitable supports include aluminum oxide, zirconium oxide, titanium oxide, silicon oxide, and the like, as well as combinations comprising at least one of the foregoing supports, with alkaline earth metal stabilized aluminum oxide preferred. Examples of suitable stabilizing agents include beryllium, magnesium, calcium, strontium, barium, radium, lanthanum, gadolinium, cerium, neodymium, praseodymium, and the like, as well as oxides, alloys, and combinations comprising at least one of the foregoing agents, with barium, lanthanum, and strontium preferred. For example, when aluminum oxide is the support, lanthanum oxide is a preferred stabilizing agent. In general, the stabilized support may comprise less than or equal to about 20 weight percent (wt%) stabilizing agent, with about 0.5 wt% to about 15 wt% of the stabilizing agent preferred, and about 1 wt% to about 6 wt% of the stabilizing agent more preferred, wherein weight percent is based on the total weight of the stabilized support. Preferably, the support has a high surface area, i.e., greater than or equal to about 50 meters squared per gram ($m^2/g$). Surface areas of greater than or equal to about 100 $m^2/g$ are preferred, with greater than or equal to about 150 $m^2/g$ more preferred. Suitable average support large aggregate sizes ("$d_{50}$") can be about 5 to about 60 micrometers, wherein the aggregate size is an average based upon the major diameter, with about 10 micrometers to about 60 micrometers preferred, about 20 micrometers to about 50 micrometers more preferred, and about 30 micrometers to about 50 micrometers even more preferred for some of the aggregates. The base slurry preferably comprises binder(s) and a combination of aluminum oxides having large particle sizes (e.g., coarse particles) and small particles sizes (e.g., fine particles; $d_{50}$ of less than or equal to about 1 micrometer). The aggregate sizes (e.g., after milling) for the large particles is preferably less than or equal to about 10 micrometers (e.g., about 1 to about 5 micrometers), while the aggregate (also known as the agglomerate) size for the small particles, $d_{50}$ is preferably less than or equal to about 1.0 micrometer (e.g., about 0.1 to about 0.5 micrometers). The base slurry can comprise about 40 wt% to about 55 wt% large particles (preferably about 45 wt% to about 49 wt%), e.g., of theta aluminum oxide ($\theta$-$Al_2O_3$); about 40 wt% to about 55 wt% small particles (preferably about 45 wt% to about 49 wt%), e.g., of alpha aluminum oxide ($\alpha$-$Al_2O_3$); and about 2 wt% to about 20 wt% binder (preferably about 2 wt% to about 10 wt%), e.g., aluminum nitrate ($Al(NO_3)_3$). Alternatively, the base slurry comprises a stabilized aluminum oxide, for example lanthanum stabilized theta-aluminum oxide (La-$\theta$-$Al_2O_3$), a percentage of solids in the slurry can be 40 wt% to about 55 wt%, with about 45 wt% to about 50 wt% preferred.

In addition to the coarse and fine aluminum oxide, the base slurry can comprise a binder. The binder, which can be employed in amounts of less than or equal to about 15 wt% or so, is typically employed in an amount of about 0.5 wt% to about 10 wt%, with about 1 wt% to about 5 wt% preferred, and about 1 wt% to about 3 wt% more preferred, based upon the total weight of solids in the base slurry. Possible binders comprise materials that will not adversely affect the protective properties of the catalyst coating. Preferably, the binder, upon sintering, will transform into the same material as the support, such as alpha alumina and/or gamma alumina. Some possible binders comprise alumina nitrate, alumina hydroxide, and the like, as well as combinations comprising at least one of these binders.

In addition to the supported catalyst and the base slurry, the final slurry may comprise fugitive material(s). The fugitive material, which is employed to attain a desired coating porosity, may include carbon based materials (e.g., carbon black, graphite, and the like), non-soluble organics (e.g., sacrificial polymers), and other materials that decompose upon firing to leave the desired porosity, with polymers such as latex materials including, but not limited to, polystyrene, poly(methylmethacrylate) (PMMA), polystyrene-divinylbenzene, and/or the like, preferred. Generally, sufficient fugitive material is employed to a sufficient porosity to permit fluid communication between the sensing electrode and the sensing atmosphere, as well as, to provide protection from impurities that can cause poisoning or degradation in electrode sensitivity. For example, less than or equal to about 50 wt% fugitive material can be employed, with about 2 wt% to about 50 wt% preferred, and about 5 wt% to about 10 wt% more preferred, based upon the total weight solids in the coating formulation.

The coating formulation can be prepared for application to a sensor element using various techniques, and can be applied to the sensor element by methods such as spraying, painting, printing, dip-coating (e.g., colloidal dipping, slurry coating, and the like), tape or film casting, and the like, as well as various combinations of possible methods. The particularly preferred preparation and application method is typically determined based upon the type of sensor to be coated. Preferably, the preparation comprises first forming a base slurry and a supported catalyst. The base slurry is milled to have desired particle size distribution. The other slurry ingredients, including the supported catalyst, can then added into the base slurry, creating the final slurry. Formation of a base slurry and non-catalyzed final slurry is described in commonly assigned U.S. Patent No. 6,447,658 to Wu et al., which is hereby incorporated by reference.

The supported catalyst can be prepared by disposing the catalyst, e.g., in the form of a salt or other precursor, on a support (e.g., a platinum salt mixed with aluminum oxide (such as gamma aluminum oxide)). The mixture can then be dried (actively or passively) and optionally heated to a sufficient temperature and for a sufficient time to activate the catalyst (e.g., convert the precursor to the metal), thereby forming a supported catalyst.

The base slurry can prepared by mixing alumina, preferably a coarse high surface area alumina (such as theta-alumina ($\theta$-$Al_2O_3$) and/or lanthanum (La) stabilized $\theta$-$Al_2O_3$), and a fine alpha alumina ($\alpha$-$Al_2O_3$)) with a binder (e.g., aluminum nitrate ($Al(NO_3)_3$), wherein the coarse particles have a size, $d_{50}$, of about 30 to about 50 micrometers and the fine particles have a size, $d_{50}$, of about 0.1 micrometers to about 0.75 micrometers (e.g., about 0.5 micrometers).

The slurry preferably is stirred thoroughly prior to being milled (e.g., using a vibro-energy grinding mill) for about 2 hours, or so, to break down the aggregates of the support (e.g., $\theta$-$Al_2O_3$). During milling, the size of the aluminum oxide aggregates (e.g., $\theta$-$AlO_3$), $d_{50}$, decrease to less than or equal to about 10 micrometers. The pH of the base slurry is preferably controlled to attain the desired viscosity of about 500 centipoise (cps) to about 700 cps at a spindle speed of 12 revolutions per minute (rpm). The pH of the slurry has a direct relationship with the viscosity of the slurry, with the more acidic slurry having a higher viscosity. Consequently, a pH of about 2.8 to about 4 is preferred, with about 3.3 to about 3.5 more preferred.

Following the milling of the base slurry, the supported catalyst can be added to the base slurry. For example, about 25 wt% to about 35 wt% (with about 30 wt.% preferred) of the coarse alumina comprising the catalyst is mixed into the base slurry, based upon the total weight of solids in the base slurry. This coarse alumina can be the same type of powder used in the base slurry or a different type of high surface area alumina with a size, $d_{50}$, of about 30 micrometers to about 50 micrometers. Also among the coarse alumina added to the base slurry, optionally, the catalyst may be contained and supported on only a portion of it. The fugitive material may then be added to the slurry to form the final slurry.

The final slurry can then be applied as a catalyzed protective coating to at least a portion of the sensing element. The sensing element is immersed in the slurry, which is preferably stirred at a constant speed, and then withdrawn from the slurry. The amount of coating deposited on the sensing element depends upon the physical and chemical properties of the final slurry, such as viscosity and pH, as well as the withdrawal rate. For example, when using a conical oxygen sensor element, about 150 milligrams (mg) to about 350 mg of protective coating adhered to the element (via wet pickup) by manipulating the withdrawal rate. The protective coating created was uniform and crack-free.

Following the application of the coating to the sensing element, it is dried at room temperature. Next, the element can be calcined at a temperature sufficient to bum off the fugitive material (e.g., polymer), such as about 500°C to about 650°C for up to about 2 hours or so, prior to disposing the sensor element in a sensor housing. During calcinations, the oven ramp rate can be regulated. For example, a rate of about 5 to about 10°C per minute, or less, can be employed in order to produce crack-free coatings.

As with the pore size and porosity, the thickness of the protective coating is based upon the ability to filter out poisoning particulates while allowing passage of the exhaust gases to be sensed. Although a multi-layered coating can be employed, the protective coating is preferably a single layer having an overall thickness of up to about 300 $\mu$m. Typically, the catalytic (or protective) coating is applied to a thickness dictated by the overall sensor design. However, the catalytic coating, in general, may have a thickness of up to and exceeding about 200 micrometers ($\mu$m), with a thickness of about 50 micrometers to about 200 micrometers preferred, a thickness of about 60 micrometers to about 175 micrometers more preferred, a thickness of about 75 micrometers to about 150 micrometers even more preferred, and a thickness of about 100$\mu$m to about 150 $\mu$m yet more preferred.

The slurry can comprise about 5 wt% to about 40 wt% coarse alumina containing the supported catalyst, based upon the total weight of solids the coating formulation, with about 10 wt% to about 30 wt% preferred. At these amounts, the amount of catalyst in the final, calcined, catalyst coating is relatively low, i.e., estimated at about 0.01 wt% to about 0.3 wt% based on the total weight of the calcined catalyst coating, although up to about 1 wt% may be employed. Preferably, the catalyst is present in a loading of about 0.02 wt% to about 0.25 wt%, with about 0.06 wt% to about 0.2 wt% more preferred.

Once the catalytic coating has been applied to sensor element (i.e., the sensor element precursor), the coating is dried (actively or passively) and the coated sensor is calcined by heating the sensor to a temperature of up to about 800 °C or so, depending upon the type of sensor, whether the sensor is co-fired, and the sintering time. The sintering time is typically about a few hours or so, with about 1.0 hour to about 2.0 hours generally employed at a temperature of about 500°C to about 800°C, with about 600°C to about 650°C preferred.

The completed sensor element can then incorporated into a gas sensing apparatus. For example, for a conical sensor, a heater can be inserted into the cone, adjacent to the inner electrode, a wiring harness can be attached, and the sensor can be disposed in a shell. For a planar sensor (which comprises the heater as part of the sensor element), the sensor can be disposed in a shell and attached to a wiring harness.

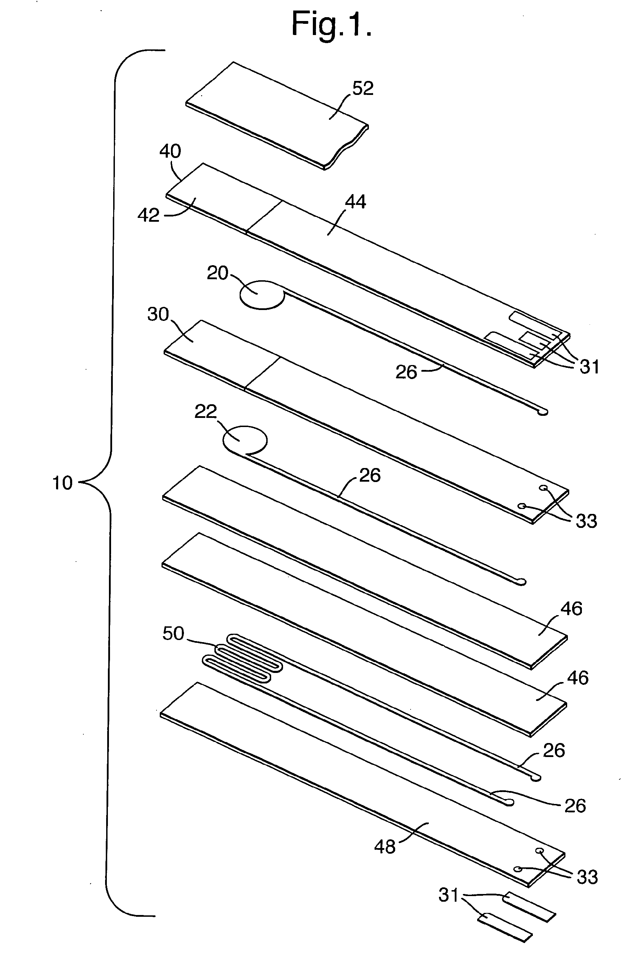

An exemplary embodiment of a sensor element comprising the catalytic coating disclosed herein is shown in Figure 1. Although a planar sensor design is illustrated, the sensor may be conical, or may be of any other appropriate design. Here, a sensor element 10 is illustrated. A sensing electrode 20 and a reference electrode 22 are disposed onto opposite sides of an electrolyte 30 creating an electrochemical cell (20/30/22).

Electrolyte 30 can comprise the entire layer or a portion thereof, can be any material that is capable of permitting the electrochemical transfer of oxygen ions, preferably has an ionic/total conductivity ratio of approximately unity, and preferably is compatible with the environment in which the gas sensor will be utilized (e.g., up to about 1,000°C). Possible materials used for electrolyte 30 include e.g., metal oxides, such as, zirconium oxide, aluminum oxide, titanium oxide, and the like, which may optionally be stabilized with yttrium, aluminum, calcium, magnesium, lanthanum, cesium, gadolium, barium, among others, and combinations, alloys, and oxides comprising at least one of the foregoing materials, with a zirconium oxide/yttrium oxide mixture preferred. Other additives that can be incorporated into electrolyte 30 include, but are not limited to, binders, waxes, and organic powders.

Electrodes 20, 22, disposed in ionic communication with the electrolyte, may comprise a wide variety of materials. Suitable materials may include, but are not limited to, metals such as platinum, palladium, gold, osmium, rhodium, iridium, and ruthenium, and oxides thereof; optionally in combination with metal oxides, such as zirconium oxide, yttrium oxide, cerium oxide, calcium oxide, aluminum oxide, and the like; as well as combinations comprising at least one of the foregoing metals and/or metal oxides.

On a first side of sensing electrode 20, opposite to electrolyte 30, is an optional protective layer 40 having an optional dense section 44 and a porous section 42 that enables fluid communication between sensing electrode 20 and the exhaust gas. The catalyst coating 52 covers at least the sensing electrode 20, and, if the porous section 42 is present, preferably covers at least section 42; constituting the outermost layer of the sensor in contact with the gas to be sensed. The catalytic coating 52 may extend along the entire length of protective layer 40 or along only a portion of protective layer 40 (e.g., the length of section 42). For a conical sensor, the catalytic coating 52 preferably covers the entire sensing electrode; e.g., is disposed from the end of the sensor element up to, and optionally over, the hips.

Disposed on a second side of reference electrode 22 is a heater 50 for maintaining sensor element 10 at the desired operating temperature. Heater 50 can comprise any material capable of maintaining the sensor at a sufficient temperature to facilitate the various electrochemical reactions therein. One or more insulating layers 46 may be disposed between the reference electrode 22 and the heater 50, with an optional, additional, protective layer 48 disposed on a side of heater 50 opposite insulating layer 46.

In addition to the above sensor components, other components can be employed, including but not limited to lead gettering layer(s) (not shown), leads 26, contact pads 31, ground plane(s) (not shown), support layer(s) (not shown), additional electrochemical cell(s) (not shown), and the like. Leads 26, which supply current to heater 50 and electrodes 20, 22, are typically formed on the same layer as heater 50, sensing electrode 20, or reference electrode 22 to which they are in electrical communication and extend from heater 50/electrodes 20, 22 to the terminal end of sensor element 10 where they are in electrical communication with the corresponding via 33 and appropriate contact pads 31.

The following examples, are meant to be illustrative, not limiting.

Example 1

The surface area of the platinum per gram of the solid aluminum oxide and the average size of platinum particles obtained from two samples was analyzed. The $H_2$ chemisorption technique was used to measure the surface area of the platinum. This technique measures volumetric pressure changes due to adsorption of hydrogen onto the catalyst surface. The chemisorption data are then fitted with known adsorption isotherms (e.g., Langmuir adsorption isotherms) to derive the surface area of the catalyst.

Sample A was prepared by combining 95 mg of tetramine platinum (II) chloride with 1 gram (g) of gamma aluminum oxide having a Brunauer-Emmet-Teller (BET) surface area of about 150 square meters per gram ($m^2$/g) and an average particle size of about 20 micrometers in an aqueous solution. The mixture was dried and then heated to 400°C to about 600°C to convert the platinum salt to platinum metal and form the supported catalyst having a 5.0 wt% Pt loading, based on the total weight of the solid of the supported catalyst. The supported catalyst was then mixed into a base slurry comprising alpha aluminum oxide, gamma aluminum oxide, a binder (e.g., aluminum nitrate), a sacrificial material (e.g., carbon black), and water to form a final slurry A. The Pt loading for the final slurry A was 0.5 wt.%, based on the total weight of solids in the final slurry A. The final slurry was allowed to dry in air and was crushed into a powder form. The powdered sample was then calcined at about 650°C for about 2 hours and was used for chemisorption measurements.

Sample B was prepared by adding tetramine platinum (II) chloride directly into the aluminum oxide slurry (8.0 mg of tetramine platinum (II) chloride per gram of the solid aluminium oxide) comprising alpha aluminium oxide, gamma aluminium oxide, a binder (e.g., aluminium nitrate), a sacrificial material (e.g., carbon black), and water. The Pt loading was 0.42 wt% based on the total weight of solid of the final slurry B. The final slurry A was then dried and calcined as set forth with respect to Sample A.

The samples were aged for various amounts of time, i.e., for 0, 2, 20, and 50 hours by exposing the samples to cyclic $H_2(0.2\%)/N_2$ and $O_2(0.2\%)/N_2$ gas streams at 850°C at a cyclic frequency of 0.05 hertz (Hz), thereby approximating an exhaust environment. The results of the catalytic activity as a function of aging are shown below in Table 1.

Table 1

| Sample | Platinum (wt%) | Platinum Particle Size (nm) | Platinum Surface Area/g of Solid Aluminum Oxide (m²/g) |
|---|---|---|---|
| 0 hour aging | | | |
| A | 0.50 | 6.9 | 0.2037 |
| B | 0.42 | 5.2 | 0.2249 |
| 2 hours aging | | | |
| A | 0.50 | 19 | 0.0737 |
| B | 0.42 | 244 | 0.0055 |
| 20 hours aging | | | |
| A | 0.50 | 29.6 | 0.0472 |
| 50 hours aging | | | |
| A | 0.50 | 33.5 | 0.0416 |

As shown in Table 1, Sample A comprises a surface area of about 0.204 $m^2/g$ of the platinum per gram of solid aluminum oxide prior to aging, about 0.074 $m^2/g$ of the platinum after 2 hours of aging, about 0.047 $m^2/g$ after 20 hours of aging, and about 0.042 $m^2/g$ after 50 hours of aging. Therefore, Sample A retains substantial catalytic activity even after 50 hours of high temperature aging. In contrast, although Sample B suggests strong catalytic activity prior to aging as shown by the presence of about 0.225 $m^2/g$ of the platinum surface area per gram of the aluminum oxide solid, it loses catalytic activity after about 2 hours of aging (i.e., the platinum surface area decreases to below 0.02 $m^2/g$ of platinum per gram of the aluminum oxide solid. After 20 hours of aging of Sample B, its platinum surface area is below the estimated detection limit of the $H_2$ chemisorption technique employed (less than 0.002 $m^2$ per gram of the aluminium oxide). Consequently, as clearly supported by this example, it is preferable to support the catalyst prior to combining it with the slurry. Even after a mere 2 hours of aging the surface area of the catalyst is an order of magnitude greater with the preparation technique of Sample A. In other words, after about 2 hours of aging (in cyclic $H_2(0.2\%)/N_2$ and $O_2(0.2\%)/N_2$ gas streams at 850°C), the surface area was greater than 0.02 $m^2/g$, with greater than or equal to about 0.05 $m^2/g$ readily attained, and greater than or equal to about 0.07 $m^2/g$ and more possible. Additionally, after about 20 hours of aging (in cyclic $H_2(0.2\%)/N_2$ and $O_2(0.2\%)/N_2$ gas streams at 850°C), the surface area was greater than 0.02 $m^2/g$, with greater than or equal to about 0.03 $m^2/g$ readily attained, and greater than or equal to about 0.04 $m^2/g$ and more possible. Finally, even after about 50 hours of aging (in cyclic $H_2(0.2\%)/N_2$ and $O_2(0.2\%)$ $/N_2$ gas streams at 850°C), the surface area was greater than 0.02 $m^2/g$, with greater than or equal to about 0.03 $m^2/g$ readily attained, and greater than or equal to about 0.04 $m^2/g$ and more still possible.

Example 2

The steady state performance of three heated conical oxygen sensor elements coated with the catalytic layers as prepared in a manner similar to Sample A above (lines 56), and of those (two sensor elements) having non-catalytic aluminum oxide coatings (lines 54) were tested by exposing the sensor elements to an exhaust at a temperature of 260°C measured at the location of the sensors. A conical element was dipped into the slurry prepared in a manner similar to sample A, but with the Pt loading of 0.3 wt.% based on the total weight of solids in the final slurry, and removed at a rate of about 12.7 centimeters per minute (cm/min). The resulting coating was allowed to dry in air for about 2 hours. The dried coating was calcined at 650°C for about 2 hours to form the final coated sensor element.

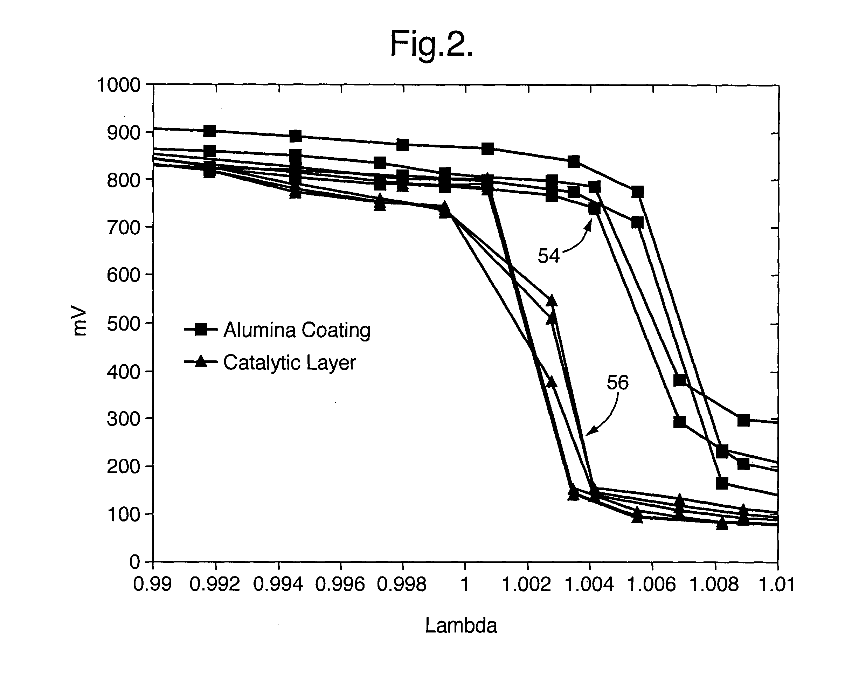

In a steady state performance test, sensor voltages were recorded during a stepped fuelling sweep about the stoichiometry point of the air to fuel ratio (A/F). In the engine dynamometer test, the air to fuel ratio was swept from the rich to lean and vice versa. The results are shown in Figure 2 where those samples containing the catalytic layer (lines 56) have switch points (lambdas at an output voltage of 0.45 V) closer to the stoichiometric point (lambda is equal to unity) than that shown by the non-catalytic coating elements (lines 54)(Lambda is an A/F divided by A/F at the stoichiometric point.). The switch point lean shift correction for the samples containing the catalytic layer is 0.003 to 0.004, as compared with the samples that do not contain the catalytic layer in which the switch point is shifted toward lean by 0.006 to 0.007 of lambda; namely an about 50% improvement in switch point lean shift correction.

Example 3

The switch points (lambda at 0.45 volts), as a function of aging hour, were evaluated on samples prepared on catalytic coated elements prepared according to the method for preparing Sample A (but with the Pt loading of 0.3 wt% based on the total weight of solids in the final slurry), and on non-catalytic coated conical sensor elements. The sensors were exposed to high temperature exhaust, having a peak temperature of about 930°C at 0, 20, and 50 hours prior to sensor performance tests at an exhaust temperature of 260°C measured at the sensor location. The sensor switch points were determined as the lambda value at which the sensor output is 0.45 V, when A/F was swept in a stepped fuelling fashion from both rich to lean and vice versa.

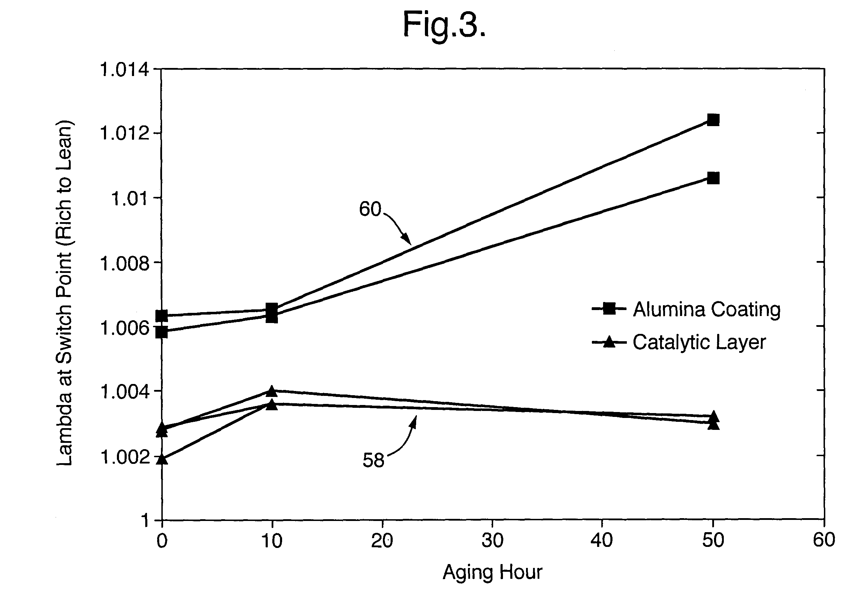

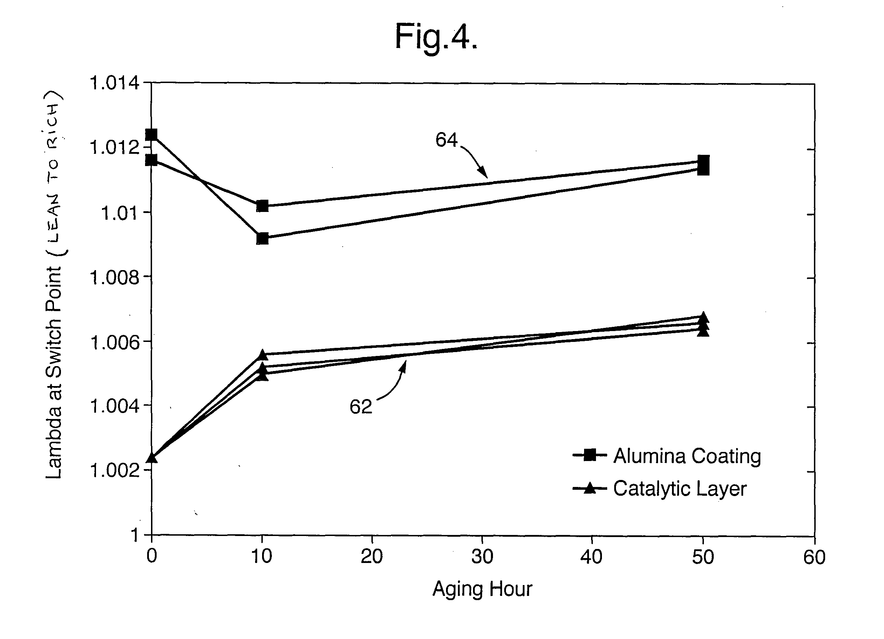

It is noted that the data shown in Figures 3 and 4 are static performance, i.e., the sensor voltage/output was recorded at each stepped A/F from rich to lean or vice versa while the A/F ratio remains constant at each point (typically the A/F ratio stays at a constant value for 15 seconds to allow recording the sensor voltages)). The data obtained when the air to fuel ratio was changed from rich to lean is shown in Figure 3. As shown in Figure 3, the catalytic coated sensors (lines 58) varied in lambda by only about 0.002 over a period of 50 hours. In contrast, the non-catalytic coated sensors (lines 60), however, varied over a lambda range of about 1.006 to about 1.012 over the 50-hour period, i.e., about 0.006 or so. More importantly, the switch points of the catalytic coated sensors remained closer to the ideal value of lambda (i.e., about

1) during the 50 hours of aging when the air to fuel ratio was swept at a steady state from lean to rich at an exhaust temperature (at the sensor location) of 280°C. In the catalytic coated sensors (lines 58), lambda only varied from about 1.002 to about 1.004. As a result, such a sensor would provide more accurate and consistent results throughout the life of the sensor.

The data obtained when the air to fuel ratio was swept from lean to rich is shown in Figure 4. As shown in Figure 4, the lean sift correction for the catalytic coated sensors (lines 62) and the non-catalytic coated sensors (lines 64) fluctuated by about 0.002 for over a period of 50 hours of the high temperature exposure. However, even in this case, the catalytic coated sensors (lines 62) were substantially closer to unity (lambda of 1) than the non-catalytic coated sensors (lines 64); i.e., the catalytic coated sensors (lines 62) remained below 1.0045, while the non-catalytic coated sensors (lines 64) remained above 1.0055.

The catalytic coating on the sensor element (i.e., catalyzed protective coating) poses a viable solution to the switch point lean shift problem caused by the different diffusivity of exhaust species. This coating preferably comprises catalytic activity even after aging at 850°C in the cyclic gas streams (one of 0.2% $H_2/N_2$, and one of 0.2% $O_2/N_2$). Preferably, the precious metal surface area is greater than or equal to about 0.03 $m^2$/g per gram of metal oxide after 2 hours of such aging, with a precious metal surface area of greater than or equal to about 0.05 $m^2$/g per gram metal oxide (e.g., alumina) after 2 hours of such aging preferred. It is further preferred to have a catalyst coating with a precious metal surface area of greater than or equal to about 0.01 $m^2$/g per gram of metal oxide after 20 hours of such aging, with greater than or equal to about 0.03 $m^2$/g per gram of metal oxide after 20 hours of such aging more preferred, and greater than or equal to about 0.04 $m^2$/g per gram of metal oxide after 20 hours of such aging even more preferred. Also preferred is to have a catalyst coating with a precious metal surface area of greater than or equal to 0.01 $m^2$/g per gram of metal oxide after 50 hours of such aging, with greater than or equal to about 0.03 $m^2$/g per gram of metal oxide after 50 hours of such aging more preferred, and greater than or equal to about 0.04 $m^2$/g per gram of metal oxide after 50 hours of such aging even more preferred. The resulting accuracy and consistency in the switch point improves a vehicle's emissions, and lessens the complexity of the algorithms that compute rich-lean stoichiometry.

Sensors containing the catalytic coating also exhibit significant improvement in low-temperature performance that results in faster light off. The gain in light off time may well be used to reduce the need for a high power internal heater, which may cause durability problems at high exhaust temperatures. Also, adequate low temperature performance can be obtained for the unheated oxygen sensor having the catalytic coating. It is also noted that there is a significant improvement in switch point lean shift correction. Sensors with the catalytic layer have switch point corrections of less than or equal to 0.004, and even less than or equal to 0.003, as compared with the samples that do not contain the catalytic layer in which the switch point is shifted toward lean by greater than or equal to 0.006 of lambda. This is an about 50% improvement in switch point lean shift correction.

The catalyst layer formed, which preferably has catalyst disposed throughout the coating and not merely on one surface thereof, will have a higher catalytic activity, better durability, and better poison resistance compared to non-catalytic porous layers that have been applied onto the sensing element.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

**Claims**

1. A method of making a sensor element (10), comprising:

   combining coarse aluminium oxide with fine aluminium oxide and a binder to form a mixture, wherein the coarse aluminium oxide has a coarse agglomerate size and the fine aluminium oxide has a fine particle size, and
   wherein the fine particle size is less than the coarse agglomerate size;
   milling the mixture to form a base slurry;
   mixing a supported catalyst with the base slurry and a fugitive material to form a final slurry;
   applying the slurry to a sensor element (10) precursor over a porous protective layer (40, 48) at least in an area opposite a sensing electrode (20); and
   calcining the sensor element (10) precursor to form a calcined sensor element (10) with a catalyzed coating over at least a portion of the porous protective layer (40, 48).

2. The method of Claim 1, wherein the supported catalyst has a catalyst loading of about 0.5 wt% to about 20 wt% catalyst metal, based upon the total weight of the supported catalyst.

3. The method of Claim 1, wherein the catalyzed coating has a catalyst concentration of about 0.01 wt% to about 1.0 wt% catalyst, based on the total weight of the catalyzed coating.

4. The method of Claim 3, wherein the catalyst concentration is about 0.02 wt% to about 0.3 wt%.

5. The method of Claim 4, wherein the catalyst concentration is about 0.06 wt% to about 0.2 wt%.

6. The method of Claim 1, wherein the catalyst comprises a precious metal.

7. The method of Claim 6, wherein the catalyst comprises platinum.

8. The method of Claim 1, wherein the catalyst has an average particle size of about 0.5 nm to about 40 nm.

9. The method of Claim 8, wherein the average particle size is about 7 nm to about 30 nm.

10. The method of Claim 9, wherein the average particle size is about 10 nm to about 20 nm.

11. The method of Claim 1, wherein the catalyst has a catalyst surface area of greater than or equal to about 0.03 $m^2$/g catalyst per gram of metal oxide after 2 hours of aging at 850°C in a cyclic gas stream of 0.2% $H_2/N_2$ and 0.2% $O_2/N_2$.

12. The method of Claim 11, wherein the catalyst surface area is greater than or equal to about 0.03 $m^2$/g catalyst per gram of metal oxide after 20 hours of the aging.

13. The method of Claim 12, wherein the catalyst surface area is greater than or equal to about 0.01 $m^2$/g per gram of metal oxide after 20 hours of the aging.

14. The method of Claim 13, wherein the catalyst surface area is greater than or equal to 0.01 $m^2$/g per gram of metal oxide after 50 hours of the aging.

15. The method of Claim 14, wherein the catalyst surface area is greater than or equal to about 0.03 $m^2$/g catalyst per gram of metal oxide after 50 hours of the aging.

16. The method of Claim 1, wherein the catalyzed coating forms an outermost layer of the sensor element (10).

17. The method of Claim 1, wherein lambda of the calcined sensor element (10) varies over a period of 50 hours of aging by less than or equal to about 0.003, wherein the aging comprises sweeping an air to fuel ratio at a steady state from lean to rich at an exhaust temperature of 280°C.

18. The method of Claim 1, wherein the fine particle size is less than or equal to about 1 micrometer, and wherein the coarse agglomerate size after milling is less than or equal to about 10 micrometers.

19. The method of Claim 1, wherein the fugitive material comprise a polymer.

20. A sensor element (10), comprising:

a sensing electrode (20) and a reference electrode (22) in ionic communication via an electrolyte (30);
a porous protective layer (40, 48) disposed on a side of the sensing electrode (20) opposite the electrolyte (30);
a catalysed coating disposed on a side of the porous protective layer (40, 48) opposite the sensing electrode (20), wherein the catalyzed coating comprises
coarse aluminium oxide having a coarse agglomerate size and fine aluminium oxide having a fine particle size that is less than the coarse agglomerate size; and
a supported catalyst;

wherein the sensor element (10) has a switch point correction of less than or equal to 0.004.

21. The sensor element (10) of Claim 20, wherein the sensor element (10) is a planar sensor element (10).

# Fig.1.

Fig.2.

# Fig.3.

EP 1 591 781 A1

Fig.4.

## EUROPEAN SEARCH REPORT

European Patent Office

Application Number

EP 05 07 5905

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 164 371 A (DENSO CORPORATION) 19 December 2001 (2001-12-19) * abstract * * paragraph [0018]; figure 2 * ----- | 1,20 | G01N27/407 |
| A | EP 1 215 487 A (DELPHI TECHNOLOGIES, INC) 19 June 2002 (2002-06-19) * abstract * * paragraphs [0014] - [0017]; figure 1 * ----- | 1-21 | |
| A | US 2004/007462 A1 (HOTTA ET AL.) 15 January 2004 (2004-01-15) * abstract * * paragraphs [0105], [0106]; figure 1 * ----- | 1-21 | |

TECHNICAL FIELDS SEARCHED (Int.Cl.7)

G01N

The present search report has been drawn up for all claims

| Place of search | Date of completion of the search | Examiner |
|---|---|---|
| The Hague | 25 August 2005 | Kempf, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 07 5905

This annex lists the patent family members relating to the patent documents cited in  the above-mentioned European search report.
The members are as contained in the European Patent Office EDP file on
The European Patent Office is in no way  liable for these particulars which are merely  given for the purpose of information.

25-08-2005

| Patent document cited in search report | | Publication date | Patent family member(s) | | Publication date |
|---|---|---|---|---|---|
| EP 1164371 | A | 19-12-2001 | JP<br>EP<br>US | 2002071632 A<br>1164371 A1<br>2002008025 A1 | 12-03-2002<br>19-12-2001<br>24-01-2002 |
| EP 1215487 | A | 19-06-2002 | US<br>EP | 2002102349 A1<br>1215487 A1 | 01-08-2002<br>19-06-2002 |
| US 2004007462 | A1 | 15-01-2004 | JP<br>DE | 2003232769 A<br>10256476 A1 | 22-08-2003<br>17-07-2003 |

EPO FORM P0459

For more details about this annex : see Official Journal of the European Patent Office, No. 12/82